# EUROPÄISCHE PATENTSCHRIFT

(11) **EP 2 506 953 B1**
(45) Veröffentlichungstag und Bekanntmachung des Hinweises auf die Patenterteilung: **10.01.2018**
(21) Anmeldenummer: 10773335.4
(22) Anmeldetag: 05.11.2010
(51) Int. Cl.: F24C 15/20, B01D 46/10, B01D 46/52

(54) **DUNSTABZUGSHAUBE**
EXTRACTOR HOOD
HOTTE ASPIRANTE

(30) Priorität: 30.11.2009 DE 202009016200 U
(43) Veröffentlichungstag der Anmeldung: 10.10.2012
(73) Patentinhaber: BSH Hausgeräte GmbH, 81739 München (DE)
(72) Erfinder: EICH, Holger, 76287 Rheinstetten (DE); GOCZOL, Andrzej, 75223 Niefern-Öschelbronn (DE); KLEMM, Jochen, 69207 Sandhausen (DE); KNOCH, Ralf, 76228 Karlsruhe (DE); NEUMANN, Ulmar, 76694 Forst (DE); PRESSE, Anja, 75031 Eppingen (DE); REIFF, Udo, 75438 Knittlingen (DE); RICHTER, Maja, 76227 Karlsruhe (DE); SCHNATZ, Martina, 75015 Bretten (DE); SEYFRID, Paul, 76532 Baden-Baden (DE)
(74) Vertreter: Lang, Michael
(86) Internationale Anmeldenummer: PCT/EP2010/066931
(87) Internationale Veröffentlichungsnummer: WO 2011/064083

(56) Entgegenhaltungen:
- WO-A1-01/91886
- WO-A1-03/086793
- WO-A1-2010/101520
- DE-U1- 29 908 791
- DE-U1-202009 017 271
- GB-A- 888 823
- US-A- 3 217 470
- US-A- 4 350 504
- US-A1- 2008 047 430

## Beschreibung

Die Erfindung betrifft eine Dunstabzugshaube.

Filter für Kraftfahrzeuge und Klimaanlagen sind beispielsweise aus der WO 01 / 91886 A1 bekannt. In dieser Schrift wird ein Filter, insbesondere für ein Fahrzeug, beschrieben. Der flächige Filterkörper umfasst eine Adsorptionsschicht mit einer dreidimensionalen Fasermatrix aus fixierten partikelförmigen Adsorbentien. Der Filterkörper kann zwei flächige adsorptive Lagen aufweisen, die miteinander plissiert sind. Der Filter wird beispielsweise in die Außenluft-Zuführung zur Fahrgastzelle von Personen- und Nutzkraftwagen integriert.

In der US 2008/0047430 A1 ist ein Filterelement beschrieben, in dem ein gefaltetes Verbund-Substrat aus einer nicht-gewebten Materiallage verwendet wird. Die Materiallage umfasst Fasern, die aus thermoplastischem Klebstoff bestehen. Weiterhin umfasst das Verbundsubstrat eine Gasentfernungs-Lage. Das Verbundsubstrat ist gefaltet und wird durch ein Formhalteglied gehalten. Dieser Filter wird beispielsweise für Klimaanlagen in Fahrzeugen oder Gebäuden verwendet.

Zudem wird auch in der WO 03/086793 A1 eine Luftreinigungsvorrichtung für eine Fahrzeugkabinen offenbart. Die Luftreinigungsvorrichtung umfasst einen Partikelfilter mit einer Abdeckschicht aus nicht-gewobenem Fasermaterial, das gefaltet ist, und einen Gasfilter, der ebenfalls gefaltet ist. Der Gasfilter und der Partikelfilter werden in einem gemeinsamen Gehäuse gehalten.

Bekannte Filterelemente in Dunstabzugshauben zur Ausfilterung oder Abscheidung von Geruchsstoffen weisen in der Regel einen Aufbau auf, bei dem eine Filtermaterialpatte, die aus Schaumstoff besteht und mit Aktivkohle beladen ist, mit einem Vlies ummantelt wird. Hierbei kann die Aktivkohlematte in einen Kunststoffrahmen eingelegt werden, an dem das Vliesmaterial an der Oberseite und der Unterseite verschweißt wird.

In der GB 888,823 A ist eine Verbesserung eines Gasreinigers beschrieben. Hierbei wird in einer Dunstabzugshaube ein akkordeonförmig gefalteter Rauchfilter verwendet. Dem Rauchfilter ist ein Geruchsfilter nachgeschaltet, der aus einem Korb, in dem Aktivkohle vorgesehen ist, besteht.

In der US 3,217,470 A wird eine Luftreinigungsvorrichtung beschrieben. Hierbei wird eine Motorträgerplatte verwendet, die ein Paar elektrischer Motoren trägt. Durch die Motoren werden Gebläse angetrieben, die jeweils von einem ringförmigen Filterelemente umgeben sind. Die Filterelemente sind so angeordnet, dass Luft, durch die Vorrichtung angesaugt wird, zuerst durch die Filterelemente passieren muss, bevor diese die Gebläse erreichen. Die Filterelemente können aus gefaltetem Filtermaterial bestehen. Beispielsweise können Glasfaserelemente verwendet werden, die mit Aktivkohle versehen sein kann.

Schließlich offenbart die DE 299 08 791 U1 eine Dunstabzugsvorrichtung. Bei dieser Dunstabzugsvorrichtung ist im Eintrittsbereich der Ansaugeinheit mindestens eine den lichten Querschnitt abdeckende Matte aus Filtermaterial angebracht, durch die das Medium zwangsweise hindurchtritt. Die Matte kann ziehharmonikaartig gefaltet sein.

Ein Nachteil dieser bekannten Geruchsfilter von Dunstabzugshauben besteht darin dass die Größe der wirksamen Filteroberfläche, über die die zu reinigende Luft in die Filtermaterial matte eintreten kann, gering ist. Um dennoch eine ausreichende Reinigung der Luft von Geruchsstoffen zu realisieren, kann es daher erforderlich sein mehrere Filterelemente vorzusehen. Dies ist aber aufgrund des in einer Dunstabzugshaube zur Verfügung stehenden Bauraums nicht oder nur bedingt realisierbar. Alternativ kann die Höhe oder Dicke der Filtermaterialmatte groß gewählt werden. Dies führt aber zu einem erhöhten Luftwiderstand, der wiederum zu einer erhöhten Geräuschentwicklung führt.

Die Aufgabe der vorliegenden Erfindung ist es daher eine Dunstabzugshaube mit einem Filterelement zu schaffen, mit der bei geringer Geräuschentwicklung eine zuverlässige Reinigung von verunreinigter Luft, insbesondere von Wrasen und Dünsten, von Geruchsstoffen möglich ist.

Der Erfindung liegt die Erkenntnis zugrunde, dass diese Aufgabe gelöst werden kann, indem der Strömungswiderstand, der durch das Filterelement erzeugt wird, minimiert wird. Insbesondere ist hierzu zumindest in der Anströmseite des Filterelementes zumindest eine Luftführung vorgesehen, die sich in Höhenrichtung des Filterelementes erstreckt.

Die vorliegende Erfindung betrifft eine Dunstabzugshaube mit den Merkmalen gemäß Anspruch 1.

Durch die Anordnung des Filterelementes nach dem Lüfter wird der Vorteil erzielt, dass die von Geruchsstoffen zu reinigende Luft durch den Geruchsfilter gedrückt werden kann. Indem bei der erfindungsgemäßen Dunstabzugshaube das Filterelement in der Anströmseite zudem Vertiefungen aufweist, ist bei geringen Abmessungen des Filterelementes, insbesondere in Breiten- und Tiefenrichtung dennoch eine große Filteroberfläche gegeben. Durch diese geringen Abmessungen des Filterelementes wird der Einbau des Filterelementes in einer Position, die dem Lüfter nachgeschaltet ist, möglich. Von dem Lüfter wird die Luft beispielsweise über einen Rohrstutzen, der an den Lüfter angeschlossen ist, zu dem Filterelement geleitet. Die durch das Filterelement hindurch getretene und dadurch gereinigte Luft tritt anschließend über Öffnungen in dem Kamin oder Kanal der Dunstabzugshaube, der den Lüfter und das Filterelement umgibt, aus. Je nach Form der Dunstabzugshaube können diese Austrittsöffnungen beispielsweise an drei oder vier der Seitenflächen des Kanals vorgesehen sein.

Vorzugsweise ist das mindestens eine Filterelement, das in der erfindungsgemäßen Dunstabzugshaube eingesetzt wird, ein Filterelement das im Folgenden beschrieben wird. Die Dunstabzugshaube stellt vorzugsweise eine Umlufthaube dar.

Erfindungsgemäß wird ein Filterelement für eine Dunstabzugshaube verwendet, das einen Geruchsfilter umfasst. Das Filterelement ist dadurch gekennzeichnet, dass in der Anströmseite des Filterelementes Vertiefungen vorgesehen sind, die durch den Geruchsfilter gebildet werden und sich zumindest über die Hälfte der Höhe des Filterelementes erstrecken.

Als Höhe wird die Abmessung bezeichnet, die in der Hauptströmungsrichtung der anströmenden Luft liegt, das heißt parallel dazu liegt. In der Regel stellt die Höhe des Filterelementes beispielsweise den Abstand zwischen der Unterseite und der Oberseite des Filterelementes im eingebauten Zustand dar. Als Breite und Tiefe werden die Abmessungen bezeichnet, die senkrecht zu der Hauptströmungsrichtung liegen. Insbesondere wird als Breite des Filterelementes der Abstand zwischen den seitlichen Enden des Filterelementes bezeichnet. Als Tiefe des Filterelementes wird der Abstand zwischen dem vorderen Ende und dem hinteren Ende des eingebauten Filterelementes bezeichnet. Sofern nicht anders angegeben, werden die Bezeichnungen oben, unten, vorne und hinten bezüglich einer montierten Dunstabzugshaube und darin montierten Filterelement verwendet.

Das erfindungsgemäß verwendete Filterelement umfasst einen Geruchsfilter. Als Geruchsfilter wird hierbei der Teil des Filterelementes bezeichnet, in dem das Filtermaterial enthalten ist oder der durch das Filtermaterial gebildet wird. Das Filtermaterial kann gemäß der vorliegenden Erfindung Aktivkohle aufweisen oder aus Aktivkohle bestehen. Als Filtermaterial kann weiterhin beispielsweise Aktivkohle mit Zusatzstoffen, wie Katalysatoren, anderen geruchbindenden oder Geruchsstoffe zersetzenden Materialien verwendet werden. Auch diese Filtermaterialien bilden den Geruchsfilter oder sind in diesem enthalten.

Als Anströmseite des Filterelementes wird die Seite bezeichnet, an der das Filterelement von der zu reinigenden Luft angeströmt wird. In der Regel handelt es sich bei der Anströmseite des Filterelementes daher um die Unterseite des Filterelementes.

Indem in dem Filter in der Anströmseite Vertiefungen vorgesehen sind, die durch den Geruchsfilter gebildet werden und sich zumindest über die Hälfte der Höhe des Filterelementes erstrecken, wird die Filteroberfläche, über die zu reinigende Luft in den Geruchsfilter und dadurch in das Filtermaterial eintreten kann, vergrößert. Hierdurch wird der Luftwiderstand, der durch den Eintritt der Luft in den Geruchsfilter entsteht, verringert und das durch den Filter strömende Luftvolumen wird vergrößert. Die Vertiefung wird erfindungsgemäß von einer Außenseite des Geruchsfilters begrenzt. Somit stellt die gesamte Fläche in der Vertiefung eine Filteroberfläche dar. Insofern unterscheiden sich die erfindungsgemäß vorgesehenen Vertiefungen von Hohlräumen, die in herkömmlichen Geruchsfiltern im Inneren gebildet sind. Zudem sind die Vertiefungen erfindungsgemäß vorzugsweise so gebildet, dass diese durch Flächen gebildet werden, die sich über die gesamte Breite oder Tiefe des Geruchsfilters erstrecken. Die Flächen können ebene Flächen darstellen, die zueinander geneigt sind. Alternativ können die Flächen aber auch gekrümmte Flächen darstellen, die entgegen gesetzt zueinander gekrümmt sind. Die Vertiefungen bilden dadurch Luftführungskanäle, deren Breite von der Anströmseite des Filterelementes aus über die Höhe der Vertiefung abnimmt. Bei den erfindungsgemäß vorgesehenen Vertiefungen können daher Luftverwirbelungen verhindert werden. Die zumindest zwei Flächen, die jeweils eine Vertiefung bilden, sind bei dem erfindungsgemäß verwendeten Filterelement zu der Hauptströmungsrichtung der zu reinigenden Luft geneigt. Hierdurch wird der Eintritt der zu reinigenden Luft in den Geruchsfilter begünstigt.

Das Filterelement kann beispielsweise eine Breite von 150-250mm, vorzugsweise 230mm, und eine Tiefe von 150-250mm, vorzugsweise von 190mm, aufweisen. Die Höhe des Filterelementes kann beispielsweise im Bereich von 30-120 mm liegen und vorzugsweise 50mm betragen. Durch diese relativ große Höhe kann bei dem erfindungsgemäß verwendeten Filterelement die Filteroberfläche des Geruchsfilters maximiert werden.

Vorzugsweise weist der Geruchsfilter über dessen Fläche eine konstante Dicke auf. Indem die Dicke über die Fläche des Geruchsfilters konstant ist, werden ein Aufstauen von zu reinigender Luft zum einen und ein unkontrolliertes Durchtreten von Luft durch den Geruchsfilter zum anderen verhindert. Zudem ist die Herstellung des Filterelementes vereinfacht, da beispielsweise ein Ausschneiden von Material zur Bildung der Vertiefungen in dem Geruchsfilter nicht notwendig ist. Die Vertiefungen können vielmehr durch Umformen des Geruchsfilters gebildet werden. Der Geruchsfilter stellt vorzugsweise in seinem Rohzustand, das heißt vor einer Umformung, eine Matten- oder Plattenform dar. Die Dicke des Geruchsfilters kann erfindungsgemäß gering gewählt werden. Beispielweise kann ein Geruchsfilter eingesetzt werden, der eine Dicke von weniger als 10mm, beispielsweise 5mm, aufweist.

Vorzugsweise ist die Länge des Geruchsfilters größer als die Breite des Filterelementes. Als Länge des Geruchsfilters wird hierbei bei einer rechteckigen Geruchsfiltermatte die Abmessung vor der Umformung der Geruchsfiltermatte verstanden, die größer als die weiteren Abmessungen ist. Alternativ kann die Breite des Geruchsfilters größer als die Tiefe des Filterelementes sein. Als Breite wird die Abmessung des Geruchsfilters im dem Zustand vor dem Umformen verstanden, die größer als die Dicke aber geringer als die Länge des Geruchsfilters ist.

Indem die Abmessung des Geruchsfilters in dessen Ausgangszustand, das heißt vor einer Umformung, in einer Richtung größer ist als die entsprechende Abmessung des Filterelementes in dieser Richtung, wird es möglich trotz der durch den Geruchsfilter vorzusehenden Vertiefungen die gesamte Fläche des Filterelementes durch den Geruchsfilter abzudecken. Hierdurch wird das Durchtreten von ungereinigter Luft durch das Filterelement verhindert.

Gemäß einer bevorzugten Ausführungsform umfasst das Filterelement einen Rahmen, in dem der Geruchsfilter an dessen Rändern gehalten wird. Der Geruchsfilter ist vorzugsweise an seinen Rändern an dem Rahmen befestigt, beispielsweise verklebt. Durch das Vorsehen eines Rahmens kann dem Filterelement zum einen eine Stabilität verliehen werden, die auch bei geringer Dicke des Geruchsfilters den Einbau des Filterelementes in einer Dunstabzugshaube erlaubt. Zum anderen kann der Rahmen als seitliche Dichtung für den Geruchsfilter dienen. Diese Funktion kommt dem Rahmen insbesondere bei solchen Geruchsfiltern zu, bei denen ein körniges oder granulatförmiges Filtermaterial zwischen Deck- oder Mantelschichten gehalten wird. Bei diesen Geruchsfiltern wird ein Austreten des Filtermaterials an den Seiten durch den Rahmen verhindert. Schließlich kann durch den Rahmen auch die Form oder Struktur des Geruchsfilters, die dieser nach einer Umformung aufweist, aufrecht erhalten werden. Eine Stabilisierung des Geruchsfilters über dessen Fläche ist daher nicht notwendig. Der Rahmen stellt vorzugsweise einen Kunststoffrahmen dar.

Erfindungsgemäß ist der Geruchsfilter gefaltet oder gewellt. In dieser Form wird der Geruchsfilter bei dem erfindungsgemäß verwendeten Filterelement eingesetzt, das heißt diese Form oder Struktur des Geruchsfilters stellt die Struktur nach einer Umformung des Geruchsfilters dar. Unter Falten wird im Sinne dieser Erfindung ein scharfes Umlenken des flächigen Geruchsfilters entlang eine ersten Linie und ein scharfes Umlenken in entgegen gesetzter Richtung entlang einer weiteren zu der ersten Linie parallelen Linie verstanden. Der Winkel, der durch das scharfe Umlenken des Geruchsfilters entsteht, kann im Bereich von größer Null bis 90° vorzugsweise aber im Bereich von 5 bis 20° liegen. Durch das Falten werden in der Unterseite des Geruchsfilters und in der Oberseite des Geruchsfilters jeweils V-förmige Vertiefungen geschaffen. Unter Wellen wird im Sinne dieser Erfindung ein Umlenken des flächigen Geruchsfilters entlang eine ersten Linie und ein Umlenken in entgegen gesetzter Richtung entlang einer weiteren zu der ersten Linie parallelen Linie verstanden. Der Winkel, der durch das Umlenken des Geruchsfilters entsteht, kann im Bereich von größer Null bis 90° vorzugsweise aber im Bereich von 5 bis 20° liegen. Somit werden durch das Wellen in der Unterseite des Geruchsfilters und in der Oberseite des Geruchsfilters jeweils U-förmige Vertiefungen geschaffen. Der Geruchsfilter wird erfindungsgemäß mehrfach gefaltet oder gewellt, wobei der Abstand zwischen den Umlenkstellen, das heißt Falt- oder Welllinien jeweils gleich groß ist. Hierdurch definiert der Geruchsfilter eine räumliche Struktur.

Durch ein solches Formen des Geruchsfilters wird die Oberfläche des Geruchsfilters, über die zu reinigende Luft in den Geruchsfilter eintreten kann, bei vorgegebener Größe des Filterelementes maximiert.

Die durch die wellenförmige oder gefaltete Struktur des Geruchsfilters vergrößerte Oberfläche des Geruchsfilters erhöht die Geruchsreduzierung bei geringerer Beeinträchtigung des Luftstroms. So werden der Druckabfall an dem Filterelement und die Geräuschentwicklung minimiert.

Gemäß einer Ausführungsform verlaufen die Falten oder Wellen in dem Geruchsfilter in Breiten- oder Tiefenrichtung des Filterelementes. Bei einem rechteckigen flächigen Geruchsfilter kann durch diese Ausrichtung der Falten oder Wellen die Stabilität der Struktur des Geruchsfilters gesteigert werden.

Der Geruchsfilter umfasst erfindungsgemäß eine Filtermaterialschicht, die an den gegenüberliegenden Oberflächen jeweils mit einer Mantelschicht, die auch als Deckschicht oder Hüllschicht bezeichnet wird, bedeckt ist. Die gegenüberliegenden Oberflächen der Filtermaterialschicht sind vorzugsweise deren Oberseite und derer Unterseite. Zusätzlich kann die Mantelschicht aber auch an den Randflächen der Filtermaterialschicht vorgesehen sein. Bei dieser Ausführungsform ist die Filtermaterialschicht vollständig von der Mantelschicht umgeben.

Die Filtermaterialschicht besteht vorzugsweise aus einem festen, insbesondere körnigen oder granulatförmigen Material. Durch das Vorsehen von Mantelschichten zumindest an der Oberseite und der Unterseite dieser Filtermaterialschicht, wird das eigentliche Filtermaterial zuverlässig gehalten. Das Material der Mantelschichten ist vorzugsweise so gewählt, dass dieses dem anströmenden Luftstrom keinen oder nur einen geringen Luftwiderstand entgegensetzt. Insbesondere wird als Material für die Mantelschicht Vlies verwendet.

Als Filtermaterial wird vorzugsweise Aktivkohle verwendet. Auch Aktivkohle mit Zusatzstoffen wie etwa Katalysatoren, andere geruchbindende oder Geruchsstoffe zersetzende Materialien sind möglich.

Bei Filterelementen, die einen Rahmen umfassen, in dem der Geruchsfilter gehalten wird, besteht dieser vorzugsweise aus vier Seitenwänden, die ein Rechteck bilden. Die Höhe der Seitenwände ist hierbei größer oder gleich der Höhe der Struktur des Geruchsfilters. Die Seitenwände weisen hierbei alle die gleiche Höhe auf.

Gemäß einer alternativen Ausführungsform ist aber die Höhe des Rahmens zumindest an einer Seite des Rahmens geringer ist als die Höhe der Geruchsfilterstruktur. Bei dieser Ausführungsform können insbesondere die Seitenwände des Rahmens, die an den Längskanten des Geruchsfilters anliegen eine geringere Höhe aufweisen als die Seitenwände, die an den Längsenden des Geruchsfilters anliegen. Als Längskanten werden hierbei die Kanten des Geruchsfilters bezeichnet, die entsprechend der Formung des Geruchsfilters eine Wellen- oder Faltenform aufweisen. Hierdurch liegt ein Teil der Seiten des Geruchsfilters frei und kann somit als Lufteintritts- oder Luftaustrittsfläche dienen.

Vorteile und Merkmale, die bezüglich des erfindungsgemäß verwendeten Filterelementes beschrieben werden, gelten - soweit anwendbar - entsprechend für die erfindungsgemäße Dunstabzugshaube und umgekehrt.

Mit der vorliegenden Erfindung wird ein verbesserter Geruchsfilter geschaffen. Bei verbesserter Geruchsreduzierung wird hierbei gleichzeitig der Strömungswiderstand reduziert. Das durch den Filter strömende Luftvolumen wird dadurch vergrößert und die Geräuschentwicklung verringert. Durch die vorliegende Erfindung wird somit die Geruchsbeseitigung durch die Dunstabzugshaube verbessert, ohne den Volumenstrom zu stark zu verringern beziehungsweise den Schallleistungspegel zu stark zu erhöhen.

Die Erfindung wird im Folgenden erneut anhand der beiliegenden Figuren beschrieben. Es zeigen:
- Figur 1:: eine perspektivische Ansicht einer Ausführungsform des erfindungsgemäß verwendeten Filterelementes;

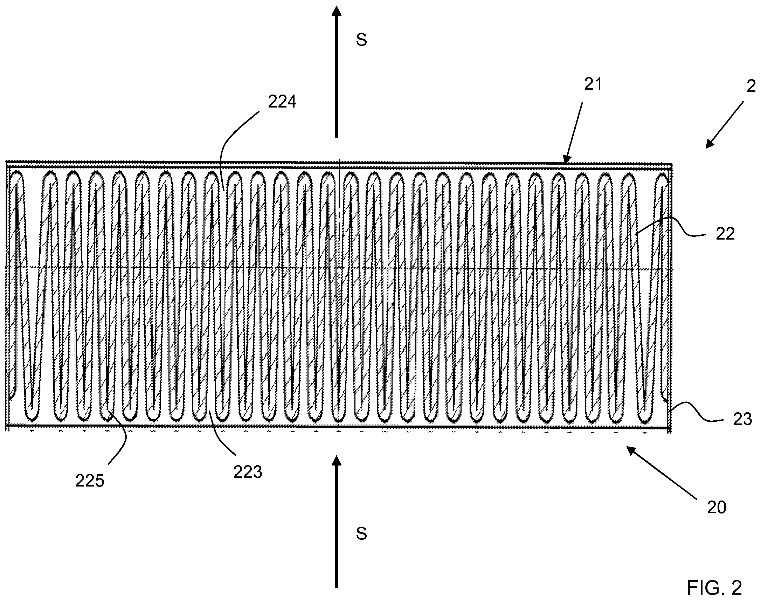

- Figur 2:: eine schematische Längsschnittansicht durch die Ausführungsform des Filterelementes nach Figur 1;
- Figur 3:: eine schematische Detailansicht des Aufbaus des Geruchsfilters nach einer Ausführungsform der Erfindung; und
- Figur 4:: eine schematische Schnittansicht einer Ausführungsform der erfindungsgemäßen Dunstabzugshaube.

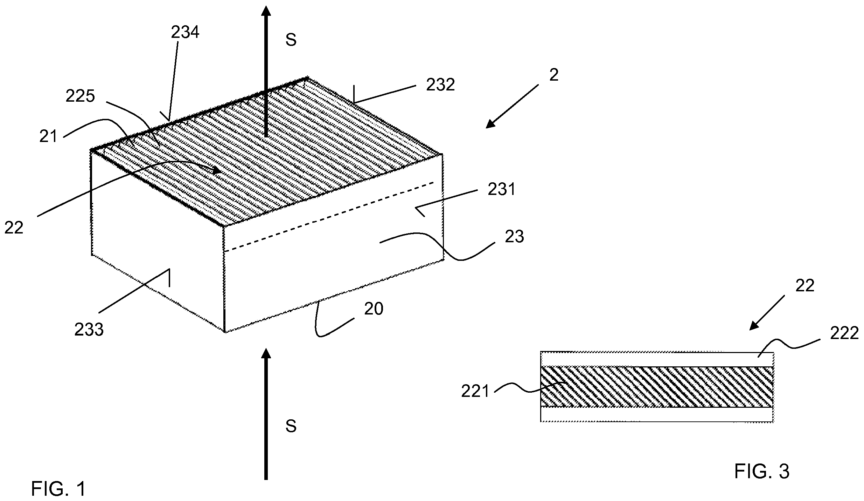

In Figur 1 ist eine schematische Perspektivansicht einer Ausführungsform des erfindungsgemäß verwendeten Filterelementes 2 dargestellt. Das Filterelement 2 besteht aus einem Rahmen 23 und einem in dem Rahmen 23 aufgenommenen Filter 22. In der dargestellten Ansicht ist der Rahmen 23 nach unten und nach oben offen, das heißt wird nur durch Seitenflächen 231 bis 234 gebildet. Der Geruchsfilter 22 ist so in den Rahmen 23 aufgenommen, dass dieser sich nicht über die Höhe des Rahmens 23 hinaus erstreckt. Die Unterseite des Rahmens 23 definiert bei der gezeigten Ausführungsform die Anströmseite 20 des Filterelementes 2 und die Oberseite die Austrittsseite 21. Die Hauptströmungsrichtung der Luft ist in den Figuren durch die Pfeile S angedeutet.

Der Rahmen 23 definiert in der dargestellten Ausführungsform einen rechteckigen Innenraum. In dem Innenraum des Rahmens 23 ist der Geruchsfilter 22 angeordnet.

Der Geruchsfilter 22 weist eine flächige Grundform auf. In Figur 3 ist ein möglicher Aufbau des Geruchsfilters gezeigt. Der Geruchsfilter 22 besteht aus einem Filtermaterial 221, das zwischen zwei Mantelschichten 222 vorgesehen ist. Das Filtermaterial 221 kann beispielsweise Aktivkohlegranulat darstellen. Als Mantelschichten 222 können Vliesschichten verwendet werden. Die Funktion der Mantelschichten 222 ist hierbei insbesondere das Halten des Filtermaterials 221.

Der so aufgebaute schichtförmige Geruchsfilter 22 wird vor dem Einbringen in den Rahmen 23 geformt. Insbesondere wird die Schicht entlang der Breite oder der Länge des Geruchsfilters 22 gefaltet oder gewellt.

Der so gewellte oder gefaltete Geruchsfilter 22 wird in den Rahmen 23 eingebracht und wird an den Seiten mit dem Rahmen 23 verbunden. Beispielsweise wird der Geruchsfilter 22 mit dem Rahmen 23 verklebt.

Bei der in den Figuren gezeigten Ausführungsform weist der Geruchsfilter 22 eine gefaltete Struktur auf. An der Oberseite und der Unterseite dieser gefalteten Struktur liegen die Umlenkstellen 225 der Faltung oder Wellen. Zwischen benachbarten Umlenkstellen 225 sind an der Oberseite und der Unterseite der gefalteten Struktur jeweils Vertiefungen 223, 224 gebildet. Die Breite der Vertiefungen 223, 224 an der Oberseite und der Unterseite der gefalteten Struktur ist gering und kann beispielsweise 5mm aufweisen. Durch die gefaltete Struktur ist der Geruchsfilter 22 damit in dem Rahmen 23 dicht gepackt vorgesehen, das heißt füllt diesen weitestgehend aus. Auch die Höhe des Rahmens 23 wird von der gefalteten Struktur weitestgehend oder vollständig abgedeckt. Insbesondere entspricht der vertikale Abstand zwischen den oberen Umlenkstellen 225 und den unteren Umlenkstellen 225 vorzugsweise der Höhe der Seitenwände 231-234 des Rahmens.

Wie in Figur 1 durch die gestrichelte Linie angedeutet, kann gemäß einer weiteren Ausführungsform die Höhe der Seitenwände 231 und 234 geringer sein, als die Höhe der gefalteten Struktur des Geruchsfilters 22. Hierdurch sind die oberen Umlenkstellen 225 und der obere Bereich der Vertiefungen 224 zu den Seiten hin offen.

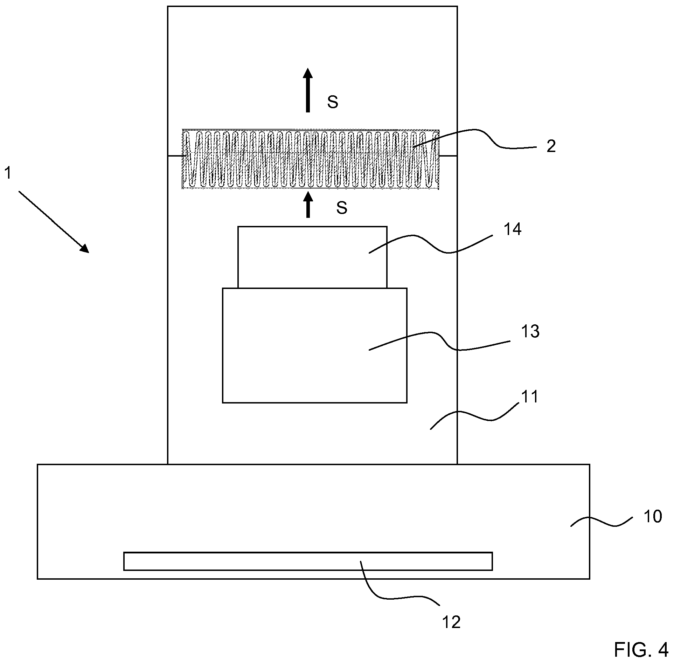

In Figur 4 ist eine Ausführungsform einer erfindungsgemäßen Dunstabzugshaube 1 gezeigt. Die Dunstabzugshaube 1 besteht aus einem Sichtschirm 10 sowie einem sich oberhalb des Sichtschirms 10 erstreckenden Kamin oder Kanal 11. In dem Sichtschirm 10 ist ein Fettfilter 12 vorgesehen. In dem Kanal 11 ist der Lüfter 13, der auch als Lüftergebläse der Dunstabzugshaube bezeichnet wird, angeordnet. An dem Lüfter 13 ist ein Rohrstutzen 14 vorgesehen, der sich von dem Lüfter 13 aus nach oben erstreckt. Oberhalb des Rohrstutzens 14 ist im oberen Bereich des Kanals 11 ein erfindungsgemäß ausgebildetes Filterelement 2 angeordnet.

Das Filterelement 2 ist so in dem Kanal 11 aufgenommen, dass die Anströmseite 20 nach unten in Richtung auf den Lüfter 13 gerichtet ist.

Über den Lüfter 13 wird Luft aus dem Raum, in dem die Dunstabzugshaube 1 montiert ist, in die Dunstabzugshaube eingesaugt. Hierbei wird die Luft an dem Fettfilter 12 von tropfenförmigen und festen Verunreinigungen befreit. Die so vorgereinigte Luft gelangt anschließend zu dem Lüfter 13 über den sie über den Rohrstutzen 14 in Richtung des Filterelementes 2 transportiert wird. Die vorgereinigte aber noch mit Geruchstoffen beladene Luft tritt über die Anströmfläche 20 in das Filterelement 2 ein. Hierbei gelangt die Luft über die Umlenkstellen 225 des Geruchsfilters 22 in das Innere des Geruchsfilters 22 und nach dem Durchströmen der unteren Mantelschicht 222 somit zu dem Filtermaterial 221. Zudem dringt die Luft von dem Lüfter 13 in die Vertiefungen 223 die zwischen den Umlenkstellen 225 gebildet sind, ein. Hierbei tritt Luft über die zu der Hauptströmungsrichtung der Luft S geneigten Flächen des Geruchsfilters 22, durch die die Vertiefungen 223 begrenzt sind, in den Geruchsfilter 22 ein. Somit dient die in Faltenform vorliegende gesamte Unterseite des Geruchsfilters 22 als Eintrittsfläche in den Geruchsfilter 22, die auch als Filteroberfläche bezeichnet wird.

Nach dem Durchdringen des Filtermaterials 221 und der oberen Mantelschicht 222 kann die so gereinigte Luft den Geruchsfilter 22 über dessen gesamte obere Oberfläche, das heißt über die Umlenkstellen 225 und die geneigten Flächen der Vertiefungen 224 verlassen. Nach dem Austreten aus dem Filterelement 2 über die Austrittsseite 21, die von dem Rahmen 23 begrenzt ist, kann die Luft über Öffnungen (nicht gezeigt) an dem Kanal 11 in den Raum, in dem die Dunstabzugshaube 1 betrieben wird zurückgeführt werden.

Die vorliegende Erfindung weist eine Reihe von Vorteilen auf. Insbesondere wird eine Möglichkeit geschaffen auf einem horizontal begrenzten Bauraum eine möglichst große Filterfläche zu schaffen. Hierdurch wird zum einen die Geruchsreduzierung erhöht und zum anderen wird der Luftstrom in der Dunstabzugshaube nur geringfügig beeinträchtigt, wodurch der Druckabfall an dem Filterelement und damit auch die Geräuschentwicklung minimiert werden. Schließlich ist das erfindungsgemäß verwendete Filterelement einfach herstellbar und in einer Dunstabzugshaube, insbesondere oberhalb des Lüfters, montierbar.

### Bezugszeichenliste

- 1: Dunstabzugshaube
- 10: Sichtschirm
- 11: Kanal
- 12: Fettfilter
- 13: Lüfter
- 14: Rohrstutzen

- 2: Filterelement
- 20: Anströmseite
- 21: Austrittsseite

- 22: Geruchsfilter
- 221: Filtermaterial
- 222: Mantelschicht
- 223: Vertiefungen
- 224: Vertiefungen
- 225: Umlenkstelle

- 23: Rahmen
- 231-234: Seitenflächen

- S: Hauptströmungsrichtung

## Patentansprüche

1. Dunstabzugshaube, die einen Lüfter (13) zum Ansaugen von Luft in die Dunstabzugshaube (1) sowie zumindest ein Filterelement (2) zum Ausfiltern von Geruchsstoffen aus der Luft aufweist, **dadurch gekennzeichnet, dass** das Filterelement einen Geruchsfilter (22) umfasst wobei Vertiefungen (223, 224) in der Anströmseite (20) des Filterelementes (2) vorgesehen sind, die Vertiefungen durch den Geruchsfilter (22) gebildet werden und sich zumindest über die Hälfte der Höhe des Filterelementes (2) erstrecken, dass das Filterelement (2) in der Hauptströmungsrichtung (S) der Luft dem Lüfter (13) nachgeschaltet ist, dass der Geruchsfilter (22) gefaltet oder gewellt ist und der Geruchsfilter (22) eine Filtermaterialschicht (221) umfasst, die an den gegenüberliegenden Oberflächen jeweils mit einer Mantelschicht (222) bedeckt ist.

2. Dunstabzugshaube nach Anspruch 1, **dadurch gekennzeichnet, dass** der Geruchsfilter (22) über dessen Fläche eine konstante Dicke aufweist.

3. Dunstabzugshaube nach einem der Ansprüche 1 oder 2, **dadurch gekennzeichnet, dass** die Länge des Geruchsfilters (22) größer ist als die Breite des Filterelementes (2) oder die Breite des Geruchsfilters (22) größer als die Tiefe des Filterelementes (2) ist.

4. Dunstabzugshaube nach einem der Ansprüche 1 bis 3, **dadurch gekennzeichnet, dass** das Filterelement (2) einen Rahmen (23) umfasst, in dem der Geruchsfilter (22) an dessen Rändern gehalten wird.

5. Dunstabzugshaube nach einem der Ansprüche 1 bis 4, **dadurch gekennzeichnet, dass** die Falten oder Wellen in dem Geruchsfilter (22) in Breiten- oder Tiefenrichtung des Filterelementes (2) verlaufen.

6. Dunstabzugshaube nach einem der Ansprüche 4 bis 5, **dadurch gekennzeichnet, dass** die Höhe des Rahmens (23) zumindest an einer Seite des Rahmens (23) geringer ist als die Höhe des Geruchsfilters (22).

## Claims

1. Extractor hood, having a fan (18) for drawing air into the extractor hood (1) and at least one filter element (2) for filtering out odorous substances from the air, **characterised in that** the filter element comprises an odour filter (22), wherein depressions (223, 224) are provided in the entry side (20) of the filter element (2), which are formed by the odour filter (22) and extend at least over half of the height of the filter element (2), that the filter element (2) is arranged downstream of the fan (13) in the main flow direction (S) of the air, that the odour filter (22) is folded or corrugated and the odour filter (22) comprises a filter material layer (221) which is covered with a coating layer (222) on each of the opposite surfaces.

2. Extractor hood according to claim 1, **characterised in that** the odour filter (22) has a constant thickness over its surface.

3. Extractor hood according to one of claims 1 or 2, **characterised in that** the length of the odour filter (22) is greater than the width of the filter element (2) or the width of the odour filter (22) is greater than the depth of the filter element (2).

4. Extractor hood according to one of claims 1 to 3, **characterised in that** the filter element (2) comprises a frame (23), in which the odour filter (22) is held at its edges.

5. Extractor hood according to one of claims 1 to 4, **characterised in that** the folds or corrugations in the odour filter (22) run in the width or depth direction of the filter element (2).

6. Extractor hood according to one of claims 4 to 5, **characterised in that** the height of the frame (23) is smaller at least on one side of the frame (23) than the height of the odour filter (22).

## Revendications

1. Hotte aspirante, qui présente un ventilateur (13) pour l'aspiration d'air dans la hotte aspirante (1) ainsi qu'au moins un élément filtrant (2) pour la filtration de substances odorantes de l'air, **caractérisée en ce que** l'élément filtrant englobe un filtre à odeurs (22), des creux (223, 224) étant prévus côté entrée (20) de l'élément filtrant (2), les creux sont constitués par le filtre à odeurs (22) et s'étendent au moins sur la moitié de la hauteur de l'élément filtrant (2), **en ce que** l'élément filtrant (2) est placé en aval du ventilateur (13) dans le sens d'écoulement principal (S) de l'air, **en ce que** le filtre à odeurs (22) est plissé ou ondulé et le filtre à odeurs (22) englobe une couche de matériau filtrant (221) respectivement couverte par une couche de revêtement (222) sur les surfaces opposées.

2. Hotte aspirante selon la revendication 1, **caractérisée en ce que** le filtre à odeurs (22) présente sur sa surface une épaisseur constante.

3. Hotte aspirante selon l'une des revendications 1 ou 2, **caractérisée en ce que** la longueur du filtre à odeurs (22) est supérieure à la largeur de l'élément filtrant (2) ou la largeur de l'élément filtrant (22) est supérieure à la profondeur de l'élément filtrant (2).

4. Hotte aspirante selon l'une des revendications 1 à 3, **caractérisée en ce que** l'élément filtrant (2) présente un encadrement (23) sur les bords duquel le filtre à odeurs (22) est maintenu.

5. Hotte aspirante selon l'une des revendications 1 à 4, **caractérisée en ce que** les plis ou ondulations dans le filtre à odeurs (22) s'étendent dans le sens de la largeur ou de la profondeur de l'élément filtrant (2).

6. Hotte aspirante selon l'une des revendications 4 à 5, **caractérisée en ce que** la hauteur de l'encadrement (23) est, au moins en un côté de l'encadrement (23), inférieure à la hauteur du filtre à odeurs (22).
